# FASCICULE DE BREVET EUROPEEN

(11) **EP 4 041 986 B1**
(45) Date de publication et mention de la délivrance du brevet: **03.07.2024**
(21) Numéro de dépôt: 20788800.9
(22) Date de dépôt: 09.10.2020
(51) Int. Cl.: E21B 47/005, E21B 47/10, G01N 3/10, E21B 47/08, G01B 5/08, G01B 7/12, G01B 21/10, G01N 3/42

(54) **DISPOSITIF DE MESURE POUR DÉTERMINER LA CONFORMITÉ DES PUITS FORÉS POUR L'EAU ET SON PROCÉDÉ DE FONCTIONNEMENT**
MESSVORRICHTUNG ZUR BESTIMMUNG DER NACHGIEBIGKEIT VON BOHRLÖCHERN FÜR WASSER UND VERFAHREN ZU DEREN BETRIEB
MEASUREMENT DEVICE FOR DETERMINING COMPLIANCE OF WELLS BORED FOR WATER AND METHOD OF OPERATION THEREOF

(30) Priorité: 10.10.2019 FR 1911283
(43) Date de publication de la demande: 17.08.2022
(73) Titulaire: Nogier, Pierre, 07220 Saint Montan (FR)
(72) Inventeur: Nogier, Pierre, 07220 Saint Montan (FR)
(74) Mandataire: Bonneau, Florence
(86) Numéro de dépôt international: PCT/EP2020/078501
(87) Numéro de publication internationale: WO 2021/069717

(56) Documents cités:
- EP-A1- 1 640 561
- KR-A- 20060 105 253

## Description

### Domaine technique de l'invention

La présente invention concerne les dispositifs de mesure et de contrôle de la qualité de la cimentation d'un puits foré tubé pour capter l'eau contenu dans les nappes souterraines et concerne en particulier un dispositif de mesure pour déterminer la conformité des puits forés pour l'eau.

### Etat de la technique

Lors de la construction d'un puits foré pour capter l'eau des nappes souterraines, un tube en PVC est placé dans le puits foré et l'espace annulaire entre le tube et la roche est comblé de ciment afin d'isoler entre elles les différentes strates géologiques qui sont traversées par le puits foré. En effet, en l'absence de ciment entre le tube et la roche, les eaux de surface souvent polluées peuvent percoler le long de la surface extérieure du tube et atteindre les eaux profondes et ainsi les contaminer. La cimentation annulaire du puits ainsi formé est donc d'une importance capitale pour éviter les risques de contamination des eaux profondes. Les risques de pollution sont les mêmes en cas de remplissage de l'espace annulaire entre le tube et la roche par un matériau non étanche tel que du sable, de la terre ou des gravillons.

Bien qu'il existe une réglementation stricte en matière de puits foré, certains professionnels peu scrupuleux ne respectent pas cette réglementation et il existe des puits forés dont l'espace annulaire entre la roche nue et le tube n'a pas été comblé de ciment et qui représente un danger potentiel non négligeable de pollution.

Des documents publiés décrivent des dispositifs utilisés pour détecter la qualité du ciment par un outil à ultrasons. Ce type d'outil est utilisé sur des puits forés dont les tubes sont métalliques. Par exemple, le document US2016/0047238 décrit un outil qui émet des ultrasons et comprend un moyen pour analyser et mesurer la signature de l'onde ultra-sonore réfléchie sur la surface du tubage et une interprétation du taux d'atténuation permet de juger de la présence et de la qualité du ciment.

L'inconvénient majeur d'un tel outil est qu'il ne fonctionne pas avec un tube non métallique tel qu'un tube en PVC.

Le document US 2,672,050 A propose une autre solution technique au problème de détection des portions de tube non cimentés. Le dispositif qui y est décrit comporte un ressort hydraulique qui exerce une pression sur deux roues diamétralement opposées qui pressent contre la paroi interne du tube et qui se déplace le long de celui-ci. Un moyen à encre et rouleau papier permet l'impression d'une courbe de variations de section du tube interne lorsque le dispositif se déplace le long du tube.

Un des inconvénients d'un tel dispositif est qu'il ne permet pas de faire la distinction entre la présence de gravillons et de ciment dans l'espace annulaire. Par conséquent, ce type de dispositif ne permet pas de statuer de façon certaine sur la conformité du tubage et l'absence de risque de pollution des nappes d'eau souterraines.

Le document KR20060105253 A décrit un dispositif de mesure du diamètre intérieur du conduit comprenant une pluralité de capteurs de déformation qui mesurent le changement de diamètre du tuyau. Le dispositif décrit a été conçue pour minimiser le frottement des capteurs avec la paroi intérieure du tuyau et pour faciliter le mouvement à l'intérieur du tuyau.

Le document EP 1640561 A1 décrit un dispositif de mesure de la dimension interne d'un puits foré. Le dispositif de mesure est un pied à coulisse optique comprenant un capteur optique fournissant une réponse corrélée à la dimension interne du puits foré, le capteur optique étant couplé à une fibre optique. Le dispositif comprend des pièces mobiles sous forme de bras mécaniques qui peuvent se déployer radialement de manière à être en contact avec la paroi interne du puits. Le capteur optique est couplé aux bras mécaniques.

Aucun de ces deux dispositifs ne permet de détecter le type de matériau situé dans l'espace annulaire entre la roche nue et le tube.

### Exposé de l'invention

C'est pourquoi, le but de l'invention est de réaliser un dispositif de mesure à la fois capable de déterminer l'absence de cimentation annulaire d'un puits foré tubé et de distinguer, en cas d'espace annulaire rempli, le type de matériau entre gravillons/sable et ciment.

Un autre but de l'invention est de fournir un procédé pour déterminer l'absence de cimentation annulaire d'un puits foré tubé et de distinguer, en cas d'espace annulaire rempli, le type de matériau entre gravillons/sable et ciment.

L'objet de l'invention est donc un dispositif de mesure selon la revendication 1, ledit dispositif de mesure étant destiné à être utilisé dans un puits foré muni d'un tube, le dispositif étant composé de deux parties, la première partie comprenant des premières pièces mobiles entre deux positions et adaptées pour venir en appui contre la surface interne du tube selon un premier axe, des moyens adaptés pour mettre en mouvement les premières pièces de façon à ce qu'elles exercent une pression sur la surface interne du tube capable de déformer le tube en absence de cimentation dans l'espace annulaire entre la roche et le tube et des moyens pour mesurer la déformation du tube vers l'extérieur selon le premier axe. Selon la caractéristique principale de l'invention, la seconde partie comprend des secondes pièces en contact avec la surface interne du tube selon un second axe perpendiculaire au premier axe et situé dans un même plan, des moyens adaptés pour mettre en mouvement les secondes pièces de façon à maintenir ce contact et des moyens pour mesurer la déformation du tube vers l'intérieur selon le second axe.

Un autre objet de l'invention est un procédé de fonctionnement d'un dispositif de mesure selon la revendication 12.

### Description brève des figures

Les buts, objets et caractéristiques de l'invention apparaîtront plus clairement à la lecture de la description qui suit faite en référence aux dessins dans lesquels :
[Fig. 1] représente une vue d'ensemble du dispositif de l'invention mis en oeuvre,
[Fig. 2] représente une vue de face du dispositif selon l'invention,
[Fig. 3] représente une vue en coupe selon un plan YZ de la première partie du dispositif selon l'invention,
[Fig. 4] représente une vue en coupe selon un plan YZ de la seconde partie du dispositif selon l'invention,
[Fig. 5] représente une vue en coupe selon un plan XY du dispositif selon l'invention,
[Fig. 6] représente une vue en coupe du dispositif selon l'invention en fonctionnement selon une étape,
[Fig. 7] représente une vue en coupe du dispositif selon l'invention en fonctionnement selon une autre étape.

### Description détaillée de l'invention

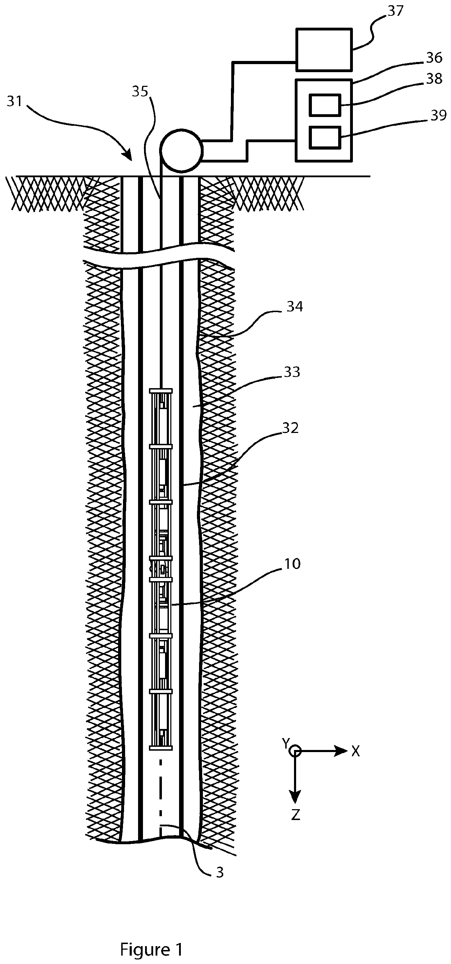

Selon la figure 1, le dispositif de mesure 10 selon l'invention est adapté pour pénétrer dans un puits foré tubé 31 dont on cherche à évaluer la conformité et en particulier la présence ou l'absence de ciment dans l'espace annulaire 33 situé entre le tube 32 et la roche 34. Le dispositif de mesure est relié à l'extérieur du puits foré à une interface de contrôle et de commande 36 et à une ou plusieurs sources d'énergie 37 par un câble ombilical 35 qui comprend le câble qui le supporte, le câble d'alimentation et de communication avec l'extérieur et des tubes d'air pour la commande des mouvements pneumatiques du dispositif de mesure. L'interface de contrôle et de commande 36 comprend principalement un microprocesseur et un programme de commande et de contrôle 38 du dispositif de mesure selon l'invention et un dispositif de lecture des données couplé à un dispositif d'enregistrement des données 39. Le tube 32 est fait d'un matériau souple tel que du PVC (polychlorure de Vinyle) ou du PE (polyéthylène). Le matériau du tube 32 a de préférence un module de Young compris entre 0 et 5 GPa.

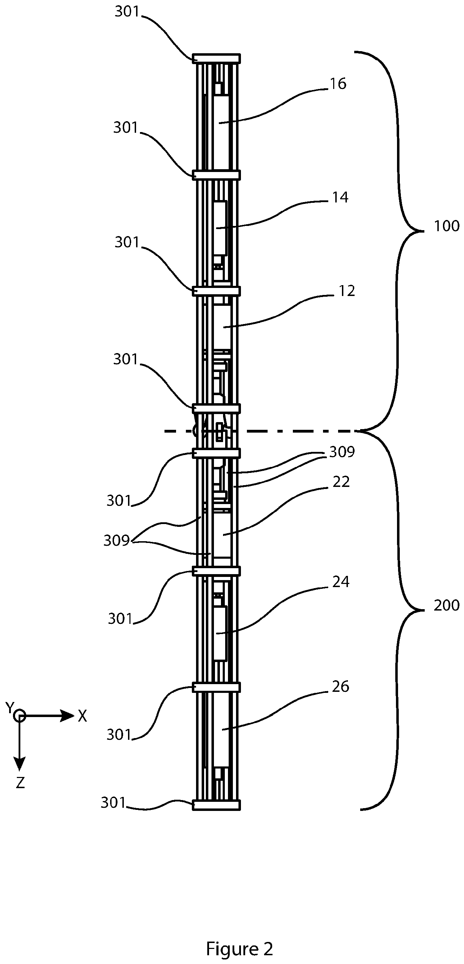

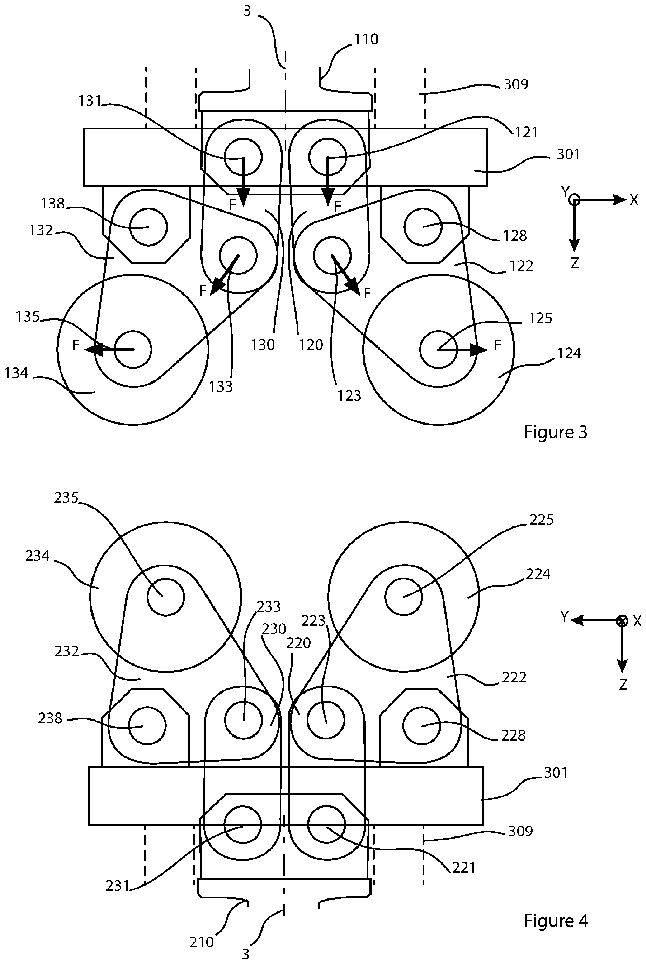

Le dispositif de mesure étant destiné à la mesure de conformité des puits foré pour l'eau, l'axe longitudinal 3 du tube du puits foré est généralement parallèle à l'axe vertical Z. Cependant, le dispositif de mesure selon l'invention n'est pas limité à un puits foré vertical. En référence à la figure 2, le dispositif 10 comporte une première partie 100 et une seconde partie 200, les deux parties 100 et 200 assemblées entre elles composent le dispositif de mesure 10 selon l'invention. Le dispositif de mesure comporte des pièces mécaniques mobiles décrites en détail en référence aux figures 3 et 4, des moyens pour mettre en mouvement ces pièces et des moyens pour mesurer les positions des pièces mobiles. Toutes ces pièces et moyens sont reliés entre eux et fixés à une structure rigide composée d'une pluralité de pièces de liaison circulaires 301 et de tirants 309 de sorte que le dispositif s'inscrit dans un cylindre. Pour ne pas surcharger la figure, les tirants 309 d'un seul étage (partie entre deux pièces de liaison circulaire) ont été référencés.

Les moyens pour mettre en mouvement les pièces mobiles comportent deux vérins pneumatiques 12 et 22 alimentés par une source d'énergie adéquate telle que au moins un compresseur situé à l'extérieur, chaque vérin étant à tige traversante. De préférence, les moyens de mesure des positions des pièces mobiles comprennent des capteurs de position 16 et 26 constitués chacun de préférence d'un capteur de mesure à magnétostriction relié respectivement à un aimant 14 et 24. Dans chacune des parties 100 et 200, les différents éléments qui composent ces moyens sont reliés entre eux le long de leur axe central situé sur l'axe longitudinal du dispositif de mesure selon l'invention. L'axe de la tige traversante du vérin 12 situé sur l'axe central de la première partie 100 est solidaire d'une pièce mécanique 110 appelée chape en référence à la figure 3. Dans la suite de la description, on considère que l'axe longitudinal du dispositif de mesure 10 est aligné sur l'axe longitudinal 3 du tube 32.

La chape 110 est mobile par rapport à la pièce de liaison 301 et des tirants 309. Deux biellettes 120 et 130 sont montées pivotantes autour respectivement d'un axe 121 et 131 situés à l'extrémité de la chape 110. Deux autres pièces mobiles 122 et 132, nommées basculeurs sont montées pivotantes autour respectivement d'un axe 128 et 138 fixe par rapport à la pièce de liaison 301. Les basculeurs 122 et 132 sont également reliés respectivement aux biellettes 120 et 130 par une liaison pivot autour respectivement d'un axe 123 et 133. Deux premières pièces 124 et 134 telles que des molettes sont reliées chacune respectivement aux basculeurs 122 et 132 par respectivement un axe 125 et 135 de sorte qu'elles peuvent tourner autour de cet axe. Les axes de rotation sont perpendiculaires au plan de la figure donc parallèles entre eux et à l'axe Y. Les deux premières pièces 124 et 134 sont diamétralement opposées l'une de l'autre et mobiles.

Le mouvement d'entraînement de la chape 110 par le vérin 12 entraine simultanément le mouvement des biellettes 120 et 130 selon l'axe Z. Le mouvement des biellettes 120 et 130 entraine à son tour les basculeurs 122 et 132 dans un mouvement de rotation autour des axes fixes 128 et 138 qui entraînent à leur tour les molettes 124 et 134 dans un mouvement quasi rectiligne dans la direction de l'axe X. Ces mouvements sont symbolisés par les flèches F sur les axes mobiles 121, 131, 123, 133, 125 et 135. Le vérin 12 est configuré pour déplacer les premières pièces 124 et 134 entre deux positions, une première position escamotée et une seconde position ouverte et inversement. La figure 3 représente les premières pièces 124 et 134 lorsqu'elles sont dans la position ouverte. Les premières pièces 124 et 134 sont en position escamotée lorsque la tige du vérin est rentrée au maximum. Dans la position escamotée, les premières pièces 124 et 134 sont situées à l'intérieur du dispositif c'est-à-dire à l'intérieur du cylindre dans lequel s'inscrit le dispositif. Cette position est illustrée sur la figure 4 qui représente en coupe les pièces mécaniques mobiles de la seconde partie 200. La seconde partie 200, identique à la première partie comporte également les mêmes pièces mobiles décrites pour la première partie 100.

L'axe de la tige traversante du vérin 22 situé sur l'axe central de la seconde partie 200 est solidaire d'une chape 210, mobile par rapport à la pièce de liaison 301 et des tirants 309. Deux biellettes 220 et 230 sont montées pivotantes autour respectivement d'un axe 221 et 231 situés à l'extrémité de la chape 210. Deux basculeurs 222 et 232 sont montés pivotants autour respectivement de l'axe de rotation 228 et 238 fixe par rapport à la pièce de liaison 301. Les basculeurs 222 et 232 sont également reliés respectivement aux biellettes 220 et 230 par une liaison pivot autour de l'axe respectif 223 et 233. Deux secondes pièces 224 et 234 telles que des molettes sont reliées chacune respectivement aux basculeurs 222 et 232. Ces secondes pièces sont montées autour d'un axe respectif 225 et 235 de sorte qu'elles peuvent tourner autour de cet axe. Les axes de rotation sont perpendiculaires au plan de la figure donc parallèles entre eux et à l'axe X. Les secondes pièces 224 et 234 sont diamétralement opposées l'une de l'autre et mobiles.

Comme pour la première partie 100, le mouvement d'entraînement de la chape 210 par le vérin 22 entraine simultanément les biellettes 220 et 230 puis les basculeurs 222 et 232, puis les molettes 224 et 234 dans un mouvement quasi rectiligne dans la direction de l'axe X. Le vérin 22 est configuré pour déplacer les secondes pièces 224 et 234 entre deux positions, une première position escamotée et une seconde position ouverte et inversement.

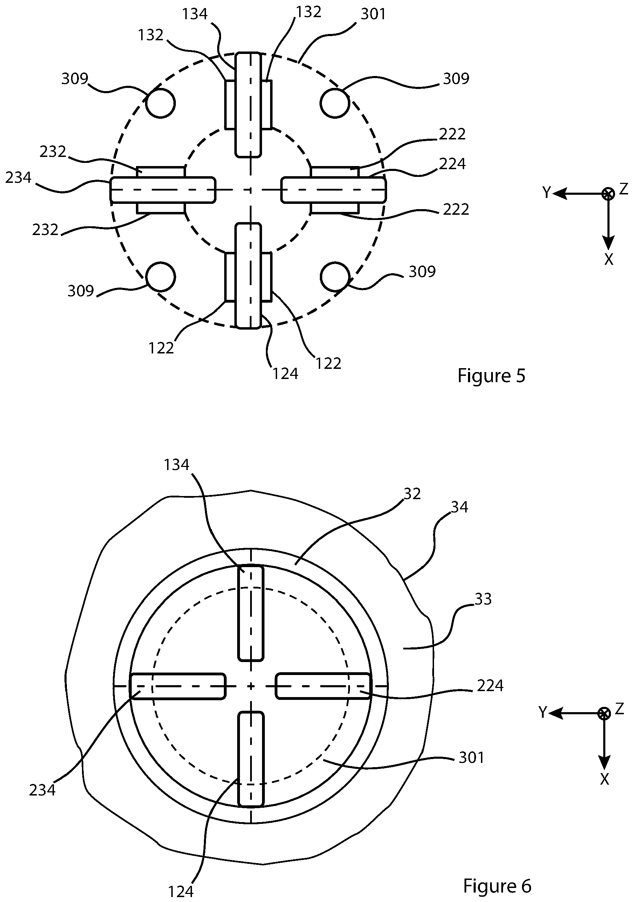

La partie 200 est positionnée par rapport à la partie 100 de façon à ce que les axes centraux longitudinaux respectifs des deux parties soient alignés et que les axes de rotation 125, 135, 225 et 235 des quatre molettes 124, 134, 224 et 234, soient dans un même plan XY perpendiculaire à l'axe longitudinal 3 du dispositif de mesure lorsqu'elles sont dans leur position escamotée. Ces caractéristiques sont illustrées sur la figure 5 qui représente une coupe du dispositif 10 selon l'invention selon un plan horizontal XY passant par les centres des axes de rotation des molettes. Les pièces de liaison 301 sont vues de dessus et sont représentées en pointillés. Les axes de rotation des deux molettes 224 et 234 de la seconde partie 200 sont perpendiculaires aux axes de rotation des deux molettes 124 et 134 de la première partie 100. Ainsi, les deux molettes 124, 134 de la première partie sont alignées sur le premier axe X et sont diamétralement opposés l'une de l'autre par rapport à l'axe Z du tube tandis que les deux molettes 224, 234 de la seconde partie sont alignées sur le second axe Y et sont diamétralement opposés l'une de l'autre par rapport à l'axe Z du tube. Les quatre molettes sont dans leur position escamotée sur la figure 5.

La position des molettes est mesurée grâce aux capteurs de position 16 et 26. Chaque capteur 16 et 26 est couplé respectivement à un aimant 14 et 24, fixé à la tige traversante du vérin 12 et 22. Ainsi, le déplacement de l'aimant 14, proportionnel au déplacement des molettes 124 et 134 est convertit en un signal électrique par le capteur 16 et transmis à l'interface de contrôle et de commande 36 par une liaison électrique située dans le câble ombilical 35. De même, le déplacement de l'aimant 24, proportionnel au déplacement des molettes 224 et 234 est convertit en un signal électrique par le capteur 26 et transmis à l'interface de contrôle et de commande 36. Les molettes de chacune des parties 100 et 200 se déplaçant simultanément et de façon symétrique par rapport à l'axe longitudinal 3, la mesure du déplacement des molettes 224 et 234 doit être interprétée comme la mesure du déplacement d'une des deux molettes 224 ou 234. De même, la mesure du déplacement des molettes 124 et 134 doit être interprétée comme la mesure du déplacement d'une des deux molettes 124 ou 134.

De préférence, la largeur des molettes est de l'ordre de 10 mm et leur surface de roulement comporte des bords arrondis de façon à épouser la surface interne cylindrique du tube.

La suite de la description décrit les étapes de fonctionnement du dispositif selon l'invention. La commande et le contrôle du dispositif se fait de l'extérieur à partir de l'interface de contrôle et de commande 36.

Le dispositif de mesure 10 est descendu dans le puits foré ou puits à sonder. De préférence, pendant la descente du dispositif, les molettes sont dans leur position escamotée. Les mesures sont effectuées lorsque le dispositif de mesure est à l'arrêt. Lorsque le dispositif est à la hauteur désirée, il est stoppé, les vérins 12 et 22 sont activés de façon à faire sortir leur tige dans un mouvement d'extension et par le jeu des pièces mobiles décrit précédemment, les molettes sont sorties jusqu'à ce que leur surface de roulement entre en contact avec la surface interne du tube 32 comme on peut le voir sur la figure 6.

Dans cette position, les molettes sont en appui contre la surface interne du tube 32 selon quatre points ou lignes d'appui équidistants et situés dans un même plan. L'interface de contrôle et de commande enregistre la position des molettes 124 et 134, cette position va servir de position de référence sur l'axe X, notée Dx0. La position des molettes 224 et 234 est également enregistrée et sert de position de référence des molettes sur l'axe Y, elle est notée Dy0. Les positions de référence des quatre molettes correspondent à une déformation nulle selon les deux axes.

Ensuite, le vérin 12 est activé dans un mouvement d'extension pour mettre en mouvement les premières pièces ou molettes 124 et 134 et pour qu'elles exercent une pression nominale comprise entre 15 et 40 Bars (1 Bar = 100 kPa) selon les deux directions de l'axe X sur les parois internes du tube. De même, le vérin 22 est activé dans un mouvement d'extension selon les deux directions de l'axe Y et la pression exercée par le vérin 22 est minimale et suffisante pour maintenir le contact des pièces mobiles ou molettes 224 et 234 sur la surface interne du tube. Pendant les étapes de mesure, la pression exercée par les molettes 224 et 234 est donc une pression d'appui suffisante pour maintenir le contact de la surface de roulement des molettes avec la surface interne du tube, cette pression d'appui est de l'ordre de 1 Bar (1 Bar = 100 kPa).

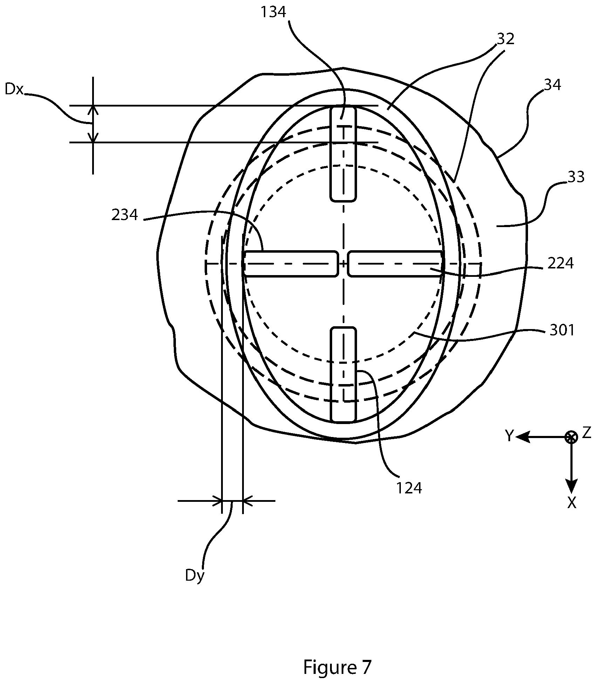

La position des molettes est mesurée en direct par les capteurs de position. En cas d'absence de cimentation dans l'espace annulaire, le tube va s'ovaliser. En effet, selon l'axe X, le diamètre du tube va avoir tendance à augmenter tandis que selon l'axe Y, le diamètre du tube va avoir tendance à diminuer. Par conséquent, pour la première partie 100, le capteur de position 16 couplé à l'aimant 14 mesure la déformation du tube 32 vers l'extérieur selon un premier axe noté X sous la pression exercée par les deux molettes 124 et 134. Pour la seconde partie 200, le capteur de position 26 couplé à l'aimant 26 mesure la déformation du tube vers l'intérieur selon un second axe noté Y perpendiculaire au premier et situé dans le même plan du premier, sous la pression exercée par les deux molettes 124 et 134. La déformation du tube vers l'intérieur correspond à l'ovalisation du tube. Le déplacement ou distance parcourue par les molettes selon l'axe X est une extension, noté Dx et le déplacement ou la distance parcourue par les molettes selon l'axe Y est un rétrécissement noté Dy comme on peut le voir sur la figure 7. La pression d'appui des molettes 214 et 234 dirigée vers l'extérieur n'empêche pas les molettes de se déplacer vers l'intérieur (donc en sens inverse par rapport à la force de pression) sous l'effet de l'ovalisation du tube.

Dans un premier temps, une pression nominale, de préférence comprise entre 15 et 30 Bars (1 Bar = 100 g kPa) est exercée selon l'axe X par les deux molettes 124 et 134, le déplacement des molettes est mesuré. Selon la figure 7, le tube 32 est représenté deux fois, une fois en pointillés dans sa position d'origine circulaire comme représenté sur la figure 6 et une fois en trait plein lorsqu'une pression est exercée par les deux molettes 124 et 134.

La pression nominale à appliquer peut être fonction des dimensions du tube à analyser. Une étape de calibration du dispositif est alors nécessaire. Cette étape consiste à déterminer sur un tube de mêmes dimensions (diamètres externe et interne et épaisseur) situé à l'air libre, la pression nécessaire pour obtenir un déplacement Dx égal à 2 mm. La pression obtenue est prise comme pression nominale P1 dans la suite du procédé de fonctionnement. La pression nominale P1 est généralement comprise entre 15 Bars et 30 Bars et de préférence égale à 20 Bars (1 Bar = 100 kPa).

Les premières étapes de fonctionnement du dispositif selon l'invention comprennent les étapes suivantes :
a) Descendre le dispositif de mesure 10 dans le puits foré 31,
b) Stopper le dispositif à la hauteur désirée pour effectuer la mesure,
c) Mettre en mouvement les premières pièces 124, 134 et les secondes pièces 224, 234 pour les mettre en contact avec la surface interne du tube et associer cette position correspondant à une déformation nulle et à une mesure de référence Dx0 et Dy0,
d) Mettre en mouvement les premières pièces 124, 134 jusqu'à ce que lesdites pièces exercent une pression nominale, comprise de préférence entre 15 Bars et 30 Bars sur la surface interne du tube,
e) Capter la position des premières pièces 124, 224 pour en déduire la mesure de la distance Dx de déformation du tube vers l'extérieur selon le premier axe X à l'aide de la mesure de référence,
f) Capter la position des secondes pièces 224, 234 pour en déduire la mesure de la distance Dy de déformation du tube vers l'intérieur selon le premier axe Y à l'aide de la mesure de référence.
Si le déplacement mesuré Dx donc selon l'axe X, est supérieur ou égal à 1,5 mm et inférieur ou égal à trois fois le déplacement Dy selon l'axe Y, soit Dx inférieur ou égal à 3 x Dy, alors on peut en conclure que l'espace annulaire entre le tube et la roche n'a pas été comblé d'un matériau tel que du ciment ou des gravillons ou du sable, donc l'espace annulaire est vide. On peut conclure que le puits foré n'est pas conforme.

C'est dans le cas d'absence totale de matière dans l'espace annulaire que l'ovalisation du tube est la plus importante. On s'aperçoit en relâchant la pression que le tube reprend sa forme initiale. Les déformations du tube ont été élastiques.

Si le déplacement mesuré Dx donc selon le premier axe X est strictement inférieur à 1,5 mm ou si le déplacement mesuré Dx est strictement supérieur à trois fois le déplacement selon Y, soit Dx supérieur à 3 x Dy, alors on considère que l'espace annulaire a été comblé. Pour déterminer si l'espace annulaire a été comblé par un matériau dur et étanche tel que du ciment ou par un autre matériau non étanche tel que des gravillons ou du sable, les étapes d), e) et f) sont répétées avec une pression P2 égale à deux fois la pression nominale P1. La pression exercée par les deux premières pièces 124 et 134 est augmentée jusqu'à 2 fois la pression nominale P1. La position des molettes selon X et Y est ensuite mesurée.

En ayant répétées les étapes d), e) et f) avec une pression P2 égale à deux fois la pression nominale P1, si le déplacement Dx est supérieur ou égal à 1,5 mm et supérieur ou égal à trois fois le déplacement selon Y, soit Dx supérieur ou égal à 3 x Dy, alors on peut en conclure que l'espace annulaire a été comblé d'un matériau non étanche tel que des gravillons ou de sable. On peut en conclure que le puits foré n'est pas conforme.

Si le déplacement Dx est strictement inférieur à 1,5 mm ou si le déplacement Dx est strictement inférieur à trois fois le déplacement selon Y, alors les étapes d), e) et f) sont répétées avec une pression P1 égale à deux fois la pression nominale.

Ensuite, si on a répété les étapes d), e) et f) avec une pression P1 égale à deux fois la pression nominale et que le déplacement mesuré Dx est inférieure à 1,5 mm alors on peut en conclure que l'espace annulaire entre le tube et la roche a été comblé d'un matériau étanche tel que du ciment.

Dans le cas de présence de sable ou de gravillons, il est plus difficile de déformer le tube, c'est pourquoi même à une pression supérieure à deux fois la pression nominale la déformation du tube en présence de gravillons ou de sable sera moins importante que celle obtenue avec deux fois la pression nominale lorsque l'espace annulaire est vide. L'ovalisation du tube est moins importante car la déformation du tube selon l'axe X est davantage une déformation plastique qu'une déformation élastique. De plus, on s'aperçoit qu'en relâchant la pression le tube ne reprend pas sa forme initiale. Cela est dû en partie parce que la déformation n'est pas entièrement élastique et aussi parce que les gravillons ou les grains de sable se sont déplacés pendant la pression exercée et ont comblés l'espace formé par le rétrécissement du diamètre du tube selon le second axe Y.

Les différentes étapes de fonctionnement du dispositif sont exécutées à partir du microprocesseur et du programme de contrôle et de commande 38, soit de façon manuelle, soit de façon automatique.

Le procédé de fonctionnement du dispositif de mesure selon l'invention est valable sur tout type de dimension de tube pour puits foré, par exemple il est valable pour des tubes dont les diamètres internes et externes sont : 112 mm et 125 mm, 115 mm et 125 mm, 117 mm et 125 mm, et plus généralement pour des tubes dont l'épaisseur est comprise entre 2 mm et 10 mm et en particulier compris entre 4 mm et 6, 5 mm.

Le procédé de fonctionnement du dispositif selon l'invention présente l'avantage de fournir une méthode efficace et fiable pour déterminer la conformité d'un puits foré et notamment si le puits foré a été construit de façon à isoler de façon étanche les différentes couches de formations traversées sans conséquences environnementales néfastes.

## Revendications

1. Dispositif de mesure (10) destiné à être utilisé dans un puits foré (31) muni d'un tube (32), ledit dispositif étant composé de deux parties (100) et (200), la première partie (100) comprenant des premières pièces (124, 134) mobiles entre deux positions et adaptées pour venir en appui contre la surface interne du tube selon un premier axe, des moyens adaptés pour mettre en mouvement les premières pièces (124, 134) de façon à ce que lesdites premières pièces exercent une pression sur la surface interne du tube capable de déformer le tube en absence de cimentation dans l'espace annulaire (33) entre la roche (34) et le tube et des moyens (14, 16) pour mesurer la déformation du tube vers l'extérieur selon le premier axe,
**Caractérisé en ce que** la seconde partie (200) comprend des secondes pièces (224, 234) avec la surface interne du tube selon un second axe perpendiculaire au premier axe et situé dans un même plan, des moyens adaptés pour mettre en mouvement lesdites secondes pièces (224, 234) de façon à maintenir ce contact et des moyens (24, 26) pour mesurer la déformation du tube vers l'intérieur selon le second axe.

2. Dispositif selon la revendication 1, dans lequel les moyens adaptés pour mettre en mouvement les premières pièces (124, 134), comprennent un vérin pneumatique (12) alimenté par au moins un compresseur situé à l'extérieur du puit, la tige dudit vérin étant solidaire d'une chape (110), deux biellettes (120, 130) montées pivotantes autour respectivement d'un axe (121, 131) situés à l'extrémité de la chape (110), deux basculeurs (122, 132) montées pivotants autour respectivement d'un axe (128) et (138) fixe, les basculeurs (122, 132) étant également reliés respectivement aux biellettes (120, 130) par une liaison pivot autour respectivement d'un axe (123) et (133).

3. Dispositif selon la revendication 2, dans lequel les premières pièces (124, 134) sont deux molettes reliées chacune respectivement aux basculeurs (122) et (132) par un axe de rotation (125) et (135) de sorte qu'elles peuvent tourner autour de cet axe, lesdits axes étant parallèle entre eux et à l'axe Y et les deux molettes (124, 134) étant diamétralement opposées l'une de l'autre.

4. Dispositif selon l'une des revendications 2 ou 3, dans lequel les moyens pour mesurer la déformation du tube vers l'extérieur selon le premier axe comprennent un capteur de position (16), un aimant (14) couplé audit capteur et fixé à la tige du vérin (12), le déplacement dudit aimant étant proportionnel au déplacement des premières pièces (124 et 134) est convertit en un signal électrique par le capteur (16) et transmis à une interface de contrôle et de commande (36) située à l'extérieur du puits foré par une liaison électrique située dans un câble ombilical (35).

5. Dispositif selon l'une des revendications 1 à 4, dans lequel les moyens adaptés pour mettre en mouvement les secondes pièces (224, 234), comprennent un vérin pneumatique (22) alimenté par au moins un compresseur situé à l'extérieur du puit, la tige dudit vérin étant solidaire d'une chape (210), deux biellettes (220, 230) montées pivotantes autour respectivement d'un axe (221, 231) situés à l'extrémité de la chape (210), deux basculeurs (222, 232) montées pivotants autour respectivement d'un axe (228) et (238) fixe, les basculeurs (222, 232) étant également reliés respectivement aux biellettes (220, 230) par une liaison pivot autour respectivement d'un axe (223) et (233).

6. Dispositif selon la revendication 5, dans lequel les secondes pièces (224, 234) sont deux molettes reliées chacune respectivement aux basculeurs (222) et (232) par un axe de rotation (225) et (235) de sorte qu'elles peuvent tourner autour de cet axe, lesdits axes étant parallèles entre eux et à l'axe X et les deux molettes (224, 234) étant diamétralement opposées l'une de l'autre.

7. Dispositif selon l'une des revendications 5 ou 6, dans lequel les moyens pour mesurer la déformation du tube vers l'intérieur selon le second axe comprennent un capteur de position (26), un aimant (24) couplé audit capteur et fixé à la tige du vérin (22), le déplacement dudit aimant étant proportionnel au déplacement des secondes pièces (224 et 234) est convertit en un signal électrique par le capteur (26) et transmis à une interface de contrôle et de commande (36) située à l'extérieur du puits foré par une liaison électrique située dans un câble ombilical (35).

8. Dispositif selon l'une des revendications 1 à 7, dans lequel lesdites premières et secondes pièces, lesdits moyens pour mettre en mouvement lesdites premières et secondes pièces et lesdits moyens pour mesurer les déformations du tube, sont reliés entre eux et fixés à une structure rigide composée d'une pluralité de pièces de liaison circulaires (301) et de tirants (309) de sorte que le dispositif de mesure (10) s'inscrit dans un cylindre.

9. Dispositif selon la revendication 8, dans lequel les premières pièces (124, 134) et les secondes pièces (224, 234) peuvent se déplacer entre une première position escamotée et une seconde position ouverte et inversement, lesdites pièces étant en position escamotée lorsque la tige du vérin (12) et respectivement (22) est rentrée au maximum, dans cette position escamotée, lesdites pièces sont situées à l'intérieur du dispositif de mesure c'est-à-dire à l'intérieur du cylindre dans lequel s'inscrit le dispositif.

10. Dispositif selon la revendication 9, dans lequel les axes de rotation (125, 135, 225 et 235) des quatre pièces (124, 134, 224 et 234) sont dans un même plan XY perpendiculaire à l'axe longitudinal du dispositif de mesure lorsqu'elles sont dans leur position escamotée.

11. Dispositif selon l'une des revendications 1 à 10 dans lequel le tube (32) est fait d'un matériau de module de Young compris entre 0 et 5 GPA .

12. Procédé de fonctionnement d'un dispositif de mesure de mesure (10) comprenant deux premières pièces (124, 134) mobiles entre deux positions et alignées sur un premier axe X et deux secondes pièces (224, 234) mobiles entre deux positions et alignées sur un second axe Y perpendiculaire au premier, lesdites quatre pièces étant adaptées pour venir en appui contre la surface interne d'un tube (32) selon quatre points d'appui équidistants et situés dans un même plan, des moyens adaptés pour mettre en mouvement les pièces mobiles de façon à ce que lesdites pièces exercent une pression sur la surface interne du tube et des capteurs de position (14, 24) pour mesurer les déformations du tube selon les deux directions des axes perpendiculaires X et Y **caractérisé en ce qu'**il comprend les étapes suivantes :
a) Descendre le dispositif de mesure (10) dans le puits foré,
b) Stopper le dispositif à la hauteur désirée pour effectuer la mesure,
c) Mettre en mouvement les premières pièces (124, 134) et les secondes pièces (224, 234) pour les mettre en contact avec la surface interne du tube et associer cette position à une déformation nulle et à une mesure de référence Dx0 et Dy0
d) Mettre en mouvement les premières pièces (124, 134) jusqu'à ce que lesdites pièces exercent une pression nominale P1 comprise entre 15 Bars et 30 Bars, sur la surface interne du tube,
e) Capter la position des premières pièces (124, 224) pour en déduire la mesure de la distance Dx de déformation du tube vers l'extérieur selon le premier axe X à l'aide de la mesure de référence,
f) Capter la position des secondes pièces (224, 234) pour en déduire la mesure de la distance Dy de déformation du tube vers l'intérieur selon le second axe Y à l'aide de la mesure de référence.

13. Procédé selon la revendication 12, dans lequel si le déplacement mesuré Dx est supérieur ou égal à 1,5 mm et que le déplacement Dx est inférieur ou égal à 3 fois le déplacement Dy, alors on peut en conclure que l'espace annulaire entre le tube et la roche n'a pas été comblé de matériaux tel que du ciment ou des gravillons ou du sable, sinon les étapes d), e) et f) sont répétées avec une pression P2 égale à deux fois la pression nominale P1.

14. Procédé selon la revendication 13, dans lequel si on a répété les étapes d), e) et f) avec une pression P2 égale à deux fois la pression nominale P1, que le déplacement mesuré Dx est supérieure ou égal à 1,5 mm et que le déplacement Dx est supérieur ou égal à 3 fois le déplacement Dy, alors on peut en conclure que l'espace annulaire entre le tube et la roche a été comblé de matériaux non étanche tels que des gravillons ou du sable sinon les étapes d), e) et f) sont répétées avec une pression P3 égale à trois fois la pression nominale P1.

15. Procédé selon la revendication 14, dans lequel si on a répété les étapes d), e) et f) avec une pression P3 égale à trois fois la pression nominale P1 et que le déplacement mesuré Dx est inférieur à 1,5 mm alors on peut en conclure que l'espace annulaire entre le tube et la roche a été comblé d'un matériau étanche tel que du ciment.

## Patentansprüche

1. Messvorrichtung (10), die dazu bestimmt ist, in einem Bohrbrunnen (31) verwendet zu werden, der mit einem Rohr (32) versehen ist, wobei die Vorrichtung aus zwei Teilen (100) und (200) besteht, der erste Teil (100) umfassend erste Stücke (124, 134), die zwischen zwei Positionen bewegbar sind und zum Anliegen an der Innenoberfläche des Rohrs entlang einer ersten Achse angepasst sind, Mittel, die zum Versetzen der ersten Stücke (124, 134) in Bewegung angepasst sind, sodass die ersten Stücke einen Druck auf die Innenoberfläche des Rohrs ausüben, der fähig ist, das Rohr in Abwesenheit einer Zementierung in dem ringförmigen Raum (33) zwischen dem Gestein (34) und dem Rohr zu verformen, und Mittel (14, 16) zum Messen der Verformung des Rohrs nach außen entlang der ersten Achse,
**dadurch gekennzeichnet, dass** der zweite Teil (200) zweite Stücke (224, 234), die entlang einer zweiten Achse senkrecht zu der ersten Achse und in derselben Ebene gelegen mit der Innenoberfläche des Rohrs in Kontakt stehen, Mittel, die zum Versetzen der zweiten Stücke (224, 234) in Bewegung angepasst sind, um diesen Kontakt aufrechtzuerhalten, und Mittel (24, 26) zum Messen der Verformung des Rohrs nach innen entlang der zweiten Achse umfasst.

2. Vorrichtung nach Anspruch 1, wobei die Mittel, die zum Versetzen der ersten Stücke (124, 134) in Bewegung angepasst sind, einen pneumatischen Zylinder (12), der durch mindestens einem Kompressor gespeist wird, der außerhalb des Brunnens gelegen ist, wobei die Stange des Zylinders mit einer Abdeckung (110) fest verbunden ist, zwei Schwingarme (120, 130), die jeweils um eine Achse (121, 131) an dem Ende der Abdeckung (110) gelegen schwenkbar montiert sind, zwei Kipper (122, 132) umfasst, die um eine feste Achse (128) beziehungsweise (138) schwenkbar montiert sind, wobei die Kipper (122, 132) auch über eine Schwenkverbindung um eine Achse (123) beziehungsweise (133) jeweils mit den Schwingarmen (120, 130) verbunden sind.

3. Vorrichtung nach Anspruch 2, wobei die ersten Stücke (124, 134) zwei Räder sind, die jeweils durch eine Rotationsachse (125) und (135) mit den Kippern (122) und (132) verbunden sind, sodass sie sich um diese Achse drehen können, wobei die Achsen parallel zueinander und zu der Y-Achse verlaufen und die zwei Räder (124, 134) einander diametral gegenüberliegen.

4. Vorrichtung nach einem der Ansprüche 2 oder 3, wobei die Mittel zum Messen der Verformung des Rohrs nach außen entlang der ersten Achse einen Positionssensor (16), einen Magneten (14) umfasst, der mit dem Sensor gekoppelt und an der Stange des Zylinders (12) fixiert ist, wobei die Verschiebung des Magneten proportional zu der Verschiebung der ersten Stücke (124 und 134) durch den Sensor (16) in ein elektrisches Signal umgewandelt und an eine Steuer- und Befehlsschnittstelle (36), die außerhalb des Bohrbrunnens gelegen ist, durch eine elektrische Verbindung übertragen wird, die in einem Nabelkabel (35) gelegen ist.

5. Vorrichtung nach einem der Ansprüche 1 bis 4, wobei die Mittel, die zum Versetzen der zweiten Stücke (224, 234) in Bewegung angepasst sind, einen pneumatischen Zylinder (22), der durch mindestens einem Kompressor gespeist wird, der außerhalb des Brunnens gelegen ist, wobei die Stange des Zylinders mit einer Abdeckung (210) fest verbunden ist, zwei Schwingarme (220, 230), die jeweils um eine Achse (221, 231) an dem Ende der Abdeckung (210) gelegen schwenkbar montiert sind, zwei Kipper (222, 232) umfasst, die um eine feste Achse (228) beziehungsweise (238) schwenkbar montiert sind, wobei die Kipper (222, 232) auch über eine Schwenkverbindung um eine Achse (223) beziehungsweise (233) jeweils mit den Schwingarmen (220, 230) verbunden sind.

6. Vorrichtung nach Anspruch 5, wobei die zweiten Stücke (224, 234) zwei Räder sind, die jeweils durch eine Rotationsachse (225) und (235) mit den Kippern (222) und (232) verbunden sind, sodass sie sich um diese Achse drehen können, wobei die Achsen parallel zueinander und zu der X-Achse verlaufen und die zwei Räder (224, 234) einander diametral gegenüberliegen.

7. Vorrichtung nach einem der Ansprüche 5 oder 6, wobei die Mittel zum Messen der Verformung des Rohrs nach innen entlang der zweiten Achse einen Positionssensor (26), einen Magneten (24) umfasst, der mit dem Sensor gekoppelt und an der Stange des Zylinders (22) fixiert ist, wobei die Verschiebung des Magneten proportional zu der Verschiebung der zweiten Stücke (224 und 234) durch den Sensor (26) in ein elektrisches Signal umgewandelt und an eine Steuer- und Befehlsschnittstelle (36), die außerhalb des Bohrbrunnens gelegen ist, durch eine elektrische Verbindung übertragen wird, die in einem Nabelkabel (35) gelegen ist.

8. Vorrichtung nach einem der Ansprüche 1 bis 7, wobei die ersten und die zweiten Stücke, die Mittel zum Versetzen der ersten und der zweiten Stücke in Bewegung und die Mittel zum Messen der Verformungen des Rohrs miteinander verbunden und an einer starren Struktur fixiert sind, die aus einer Vielzahl von kreisförmigen Verbindungsstücken (301) und Zugstäben (309) besteht, sodass sich die Messvorrichtung (10) in einen Zylinder einfügt.

9. Vorrichtung nach Anspruch 8, wobei sich die ersten Stücke (124, 134) und die zweiten Stücke (224, 234) zwischen einer ersten zurückgezogenen Position und einer zweiten offenen Position und umgekehrt bewegen können, wobei sich die Stücke in der zurückgezogenen Position befinden, wenn die Stange des Zylinders (12) beziehungsweise (22) maximal eingefahren ist, wobei diese Stücke im Inneren der Messvorrichtung gelegen sind, das heißt im Inneren des Zylinders, in den sich die Vorrichtung einfügt.

10. Vorrichtung nach Anspruch 9, wobei sich die Rotationsachsen (125, 135, 225 und 235) der vier Stücke (124, 134, 224 und 234) in derselben Ebene XY senkrecht zu der Längsachse der Messvorrichtung befinden, wenn sie sich in ihrer zurückgezogenen Position befinden.

11. Vorrichtung nach einem der Ansprüche 1 bis 10, wobei das Rohr (32) aus einem Material mit einem Elastizitätsmodul zwischen 0 und 5 GPA hergestellt ist.

12. Verfahren zum Betreiben einer Messvorrichtung (10), umfassend zwei erste Stücke (124, 134), die zwischen zwei Positionen bewegbar sind und auf einer ersten Achse X ausgerichtet sind, und zwei zweite Stücke (224, 234), die zwischen zwei Positionen bewegbar sind und auf einer zweiten Achse Y senkrecht zu der ersten ausgerichtet sind, wobei die vier Stücke zum Anliegen an der Innenoberfläche eines Rohrs (32) entlang vier Anlagepunkten angepasst sind, die äquidistant und in der gleichen Ebene gelegen sind, Mittel, die zum Versetzen der bewegbaren Stücke in Bewegung angepasst sind, sodass diese Stücke einen Druck auf die Innenoberfläche des Rohrs ausüben, und Positionssensoren (14, 24) zum Messen der Verformungen des Rohrs in den zwei Richtungen der senkrechten Achsen X und Y,
**dadurch gekennzeichnet, dass** es die folgenden Schritte umfasst:
a) Absenken der Messvorrichtung (10) in den Bohrbrunnen,
b) Stoppen der Vorrichtung auf der gewünschten Höhe zum Durchführen der Messung,
c) Versetzen der ersten Stücke (124, 134) und der zweiten Stücke (224, 234) in Bewegung zum Inkontaktbringen mit der Innenoberfläche des Rohrs und Verknüpfen dieser Position mit einer Nullverformung und mit einem Referenzmaß Dx0 und Dy0,
d) Versetzen der ersten Stücke (124, 134) in Bewegung, bis die Stücke einen Nenndruck P1 zwischen 15 bar und 30 bar auf die Innenoberfläche des Rohrs ausüben,
e) Erfassen der Position der ersten Stücke (124, 224) zum Ableiten der Messung des Abstands Dx der Verformung des Rohrs nach außen entlang der ersten Achse X mittels der Referenzmessung,
f) Erfassen der Position der zweiten Stücke (224, 234) zum Ableiten der Messung des Abstands Dy der Verformung des Rohrs nach innen entlang der zweiten Achse Y mittels der Referenzmessung.

13. Verfahren nach Anspruch 12, wobei, falls die gemessene Verschiebung Dx größer als oder gleich 1,5 mm ist und die Verschiebung Dx kleiner als oder gleich dem 3-Fachen der Verschiebung Dy ist, daraus geschlossen werden kann, dass der ringförmige Raum zwischen dem Rohr und dem Gestein nicht mit Materialien wie Zement, Kies oder Sand gefüllt wurde, wobei andernfalls die Schritte d), e) und f) mit einem Druck P2 wiederholt werden, der gleich dem Zweifachen des Nenndrucks P1 ist.

14. Verfahren nach Anspruch 13, wobei, falls die Schritte d), e) und f) mit einem Druck P2 gleich dem Zweifachen des Nenndrucks P1 wiederholt wurden, die gemessene Verschiebung Dx größer als oder gleich 1,5 mm ist und die Verschiebung Dx größer als oder gleich dem 3-Fachen der Verschiebung Dy ist, daraus geschlossen werden kann, dass der ringförmige Raum zwischen dem Rohr und dem Gestein mit undichten Materialien wie Kies oder Sand gefüllt wurde, wobei andernfalls die Schritte d), e) und f) mit einem Druck P3 wiederholt werden, der gleich dem Dreifachen des Nenndrucks P1 ist.

15. Verfahren nach Anspruch 14, wobei, falls die Schritte d), e) und f) mit einem Druck P3 wiederholt werden, der gleich dem Dreifachen des Nenndrucks P1 ist, und die gemessene Verschiebung Dx kleiner als 1,5 mm ist, daraus geschlossen werden kann, dass der ringförmige Raum zwischen dem Rohr und dem Gestein mit einem dichten Material wie Zement gefüllt wurde.

## Claims

1. A measuring device (10) intended to be used in a drilled well (31) provided with a tube (32), said device being made up of two parts (100) and (200), the first part (100) comprising first components (124, 134) able to move between two positions and designed to bear against the inner surface of the tube along a first axis, means designed to cause the first components (124, 134) to move so that said first components apply to the inner surface of the tube a pressure capable of deforming the tube in the absence of cementation in the annular space (33) between the rock (34) and the tube, and means (14, 16) for measuring the outward deformation of the tube along the first axis,
**characterized in that** the second part (200) comprises second components (224, 234) in contact with the inner surface of the tube along a second axis perpendicular to the first axis and situated in the same plane, means designed to cause the second components (224, 234) to move in such a way so as to maintain this contact, and means (24, 26) for measuring the inward deformation of the tube along the second axis.

2. The device according to claim 1, wherein the means designed to cause the first components (124, 134) to move comprise a pneumatic cylinder (12) powered by at least one compressor located outside the well, the rod of said cylinder being secured to a yoke (110), two links (120, 130) pivotally mounted respectively around a pin (121, 131) located at the end of the yoke (110), two rockers (122, 132) pivotally mounted respectively around a fixed pin (128) and (138), the rockers (122, 132) also being connected respectively to the links (120, 130) by a pivot connection around a pin (123) and (133) respectively.

3. The device according to claim 2, wherein the first components (124, 134) are two thumb wheels each connected respectively to the rockers (122) and (132) by a pivot pin (125) and (135) so that they can rotate around this pin, said pins being parallel to each other and to the Y axis and the two thumb wheels (124, 134) being diametrically opposed to each other.

4. The device according to either of claims 2 or 3, wherein the means for measuring the deformation of the tube towards the outside along the first axis comprise a position sensor (16), a magnet (14) coupled to said sensor and secured to the cylinder rod (12), the movement of said magnet, being proportional to the movement of the first components (124 and 134), is converted into an electrical signal by the sensor (16) and transmitted to a control and command interface (36) located outside the drilled well by an electrical connection located in an umbilical cable (35).

5. The device according to any one of claims 1 to 4, wherein the means designed to cause the second components (224, 234) to move comprise a pneumatic cylinder (22) powered by at least one compressor located outside the well, the rod of said cylinder being secured to a yoke (210), two links (220, 230) pivotally mounted respectively around a pin (221, 231) located at the end of the yoke (210), two rockers (222, 232) pivotally mounted around a fixed pin (228) and (238) respectively, the rockers (222, 232) also being connected respectively to the links (220, 230) by a pivot connection around a pin (223) and (233) respectively.

6. The device according to claim 5, wherein the second components (224, 234) are two thumb wheels each connected respectively to the rockers (222) and (232) by a pivot pin (225) and (235) so that they can rotate around this pin, said pins being parallel to each other and to the X axis and the two thumb wheels (224, 234) being diametrically opposed to each other.

7. The device according to either of claims 5 or 6, wherein the means for measuring the deformation of the tube towards the inside along the second axis comprise a position sensor (26), a magnet (24) coupled to said sensor and secured to the cylinder rod (22), the movement of said magnet, being proportional to the movement of the second components (224 and 234), is converted into an electrical signal by the sensor (26) and transmitted to a control and command interface (36) located outside the drilled well by an electrical connection located in an umbilical cable (35).

8. The device according to any one of claims 1 to 7, wherein said first and second components, said means for causing said first and second components to move, and said means for measuring the deformations of the tube, are connected to each other and secured to a rigid structure made up of a plurality of circular connecting parts (301) and tie rods (309) so that the measuring device (10) fits into a cylinder.

9. The device according to claim 8, wherein the first components (124, 134) and the second components (224, 234) can move between a first retracted position and a second open position and conversely, said components being in the retracted position when the rod of the cylinder (12) and (22) respectively is retracted to the maximum, and wherein in this retracted position, said components are located inside the measuring device, that is to say inside the cylinder in which fits the device.

10. The device according to claim 9, wherein the pivot pins (125, 135, 225 and 235) of the four components (124, 134, 224 and 234) are located in the same plane XY perpendicular to the longitudinal axis of the measuring device when they are in their retracted position.

11. The device according to any one of claims 1 to 10, wherein the tube (32) is made of a material with a Young's modulus of between 0 and 5 GPa.

12. An operating method for a measuring device (10) comprising two first components (124, 134) able to move between two positions and aligned on a first axis X, and two second parts (224, 234) able to move between two positions and aligned on a second axis Y perpendicular to the first axis, said four components being designed to bear against the inner surface of a tube (32) at four equidistant bearing points lying in the same plane, means designed to cause the moving components to move so that said components exert pressure on the inner surface of the tube, and position sensors (14, 24) for measuring the deformations of the tube along the two directions of the perpendicular axes X and Y, **characterized in that** it comprises the following steps:
a) lower the measuring device (10) into the drilled well,
b) stop the device at the desired height to take the measurement,
c) set the first components (124, 134) and the second components (224, 234) in motion to bring them into contact with the inner surface of the tube and associate this position with zero deformation and with a reference measurement Dx0 and Dy0,
d) set the first components (124, 134) in motion until said components exert a nominal pressure P1 of between 15 bar and 30 bar on the inner surface of the tube,
e) capture the position of the first components (124, 224) to deduce the measurement of the distance Dx of deformation of the tube towards the outside along the first axis X using the reference measurement,
f) capture the position of the second components (224, 234) to deduce the measurement of the distance Dy of deformation of the tube towards the inside along the second axis Y using the reference measurement.

13. The method according to claim 12, wherein, if the measured displacement Dx is greater than or equal to 1.5 mm and the displacement Dx is less than or equal to 3 times the displacement Dy, then it can be concluded that the annular space between the tube and the rock has not been filled with materials such as cement or gravel or sand, otherwise steps d), e), and f) are repeated with a pressure P2 equal to twice the nominal pressure P1.

14. The method according to claim 13, wherein, if steps d), e), and f) have been repeated with a pressure P2 equal to twice the nominal pressure P1, and the measured displacement Dx is greater than or equal to 1.5 mm, and the displacement Dx is greater than or equal to 3 times the displacement Dy, then it can be concluded that the annular space between the tube and the rock has been filled with non-watertight materials such as gravel or sand, otherwise steps d), e), and f) are repeated with a pressure P3 equal to three times the nominal pressure P1.

15. The method according to claim 14, wherein, if steps d), e), and f) have been repeated with a pressure P3 equal to three times the nominal pressure P1 and the measured displacement Dx is less than 1.5 mm, then it can be concluded that the annular space between the tube and the rock was filled with a waterproof material such as cement.
